# DEMANDE DE BREVET EUROPEEN

(11) **EP 1 075 151 A1**
(43) Date de publication de la demande: **07.02.2001**
(21) Numéro de dépôt: 00402107.7
(22) Date de dépôt: 24.07.2000
(51) Int. Cl.: H04N 9/64

(54) **Dispositif mobile d'insertion d'une image et procédé d'insertion d'un signal video composite en Pal et Secam**

(30) Priorité: 06.08.1999 FR 9910241
(71) Demandeur: Benmebkhout, Mehamed, 75018 Paris (FR)
(72) Inventeur: Benmebkhout, Mehamed, 75018 Paris (FR)

(57) **Abrégé**

Boîtier mobile d'insertion d'une ou deux images dans l'image télévisée ou à l'écran d'un micro ordinateur et procédé d'insertion d'un signal vidéo composite en PAL/SECAM permettant par un nombre d'entrées vidéo variable et audio identique d'incruster et d'assurer par transmission infra rouge un certain nombre de fonctions

## Description

La présente invention appartient au domaine de la transmission d'images sélectionnées, à leur manipulation et à leur insertion dans une autre image selon le principe IDI d'une image dans l'image, pour procédés télévisuels PAL/SECAM ou pour tout usage en micro-informatique.

### ART ANTERIEUR DE L'INVENTION

L'art antérieur et notamment les brevets

### Ferguson GB 9024706

Thomson Consumer Electronics US 58167795 décrivent la manière sélective de réduction de la taille d'une image de manière à la présenter à l'intérieur de l'image principale en utilisant la technique de la télévision image dans l'image (IDI/PIP) par découpe d'une quantité fixe d'images auxiliaires. Ces procédés reposent sur des dispositifs, montages et commandes internes aux téléviseurs et en limitent l'usage à une seule source vidéo.

### DESCRIPTION SUCCINTE DE L'INVENTION

La présente invention concerne un boîtier externe dont la complexité et la flexibilité lui permettent par un nombre d'entrées vidéo variable selon leur nombre (réception satellite, caméra couleur, camescope, magnétoscope, vidéo disques, micro ordinateurs équipés d'une sortie vidéo composite PAL ou/et SECAM etc ...) et audio identique d'incruster et d'assurer par transmission infra rouge les fonctions suivantes à titre d'exemples non limitatifs :
- zoom de l'image en plein écran;
- déplacement de l'image dans l'image (IDI) dans l'un des quatre coins de l'écran;
- gel (arrêt sur image) de l'image dans l'image;
- changement de couleur du cadre de l'IDI;
- déclenchement automatique de l'IDI par une sonnette de porte couplée avec une caméra de surveillance;
- ouverture éventuelle par commande ou télécommande d'une gâche électrique de porte (sortie sur relais) après reconnaissance de l'image incrustée sur l'écran de la personne sollicitant cette ouverture;
- insertion automatique d'une IDI par une source vocale ou audio.

### DESSINS

La description de l'invention s'appuie pour sa compréhension sur les schémas de montage annexés pris à titre d'exemple seulement et n'en limitant pas la portée.

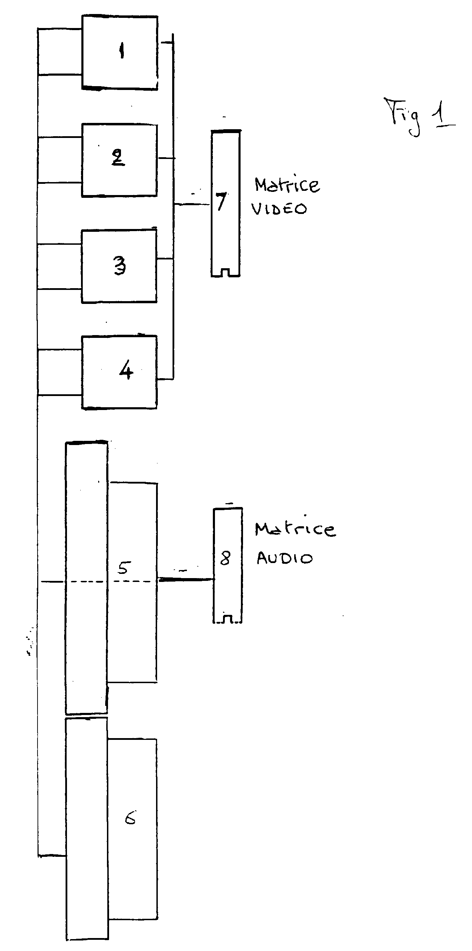

La planche 1 représente schématiquement le dispositif de connexions d'entrée d'une réalisation de boîtier de commande dans lequel sont figurées :
4 entrées couplées RCA vidéo-audio (1) (2) (3) (4)
2 entrées couplées vidéo-audio par connecteurs Peritel (5) et (6) et leur matrice respective (7) et (8).

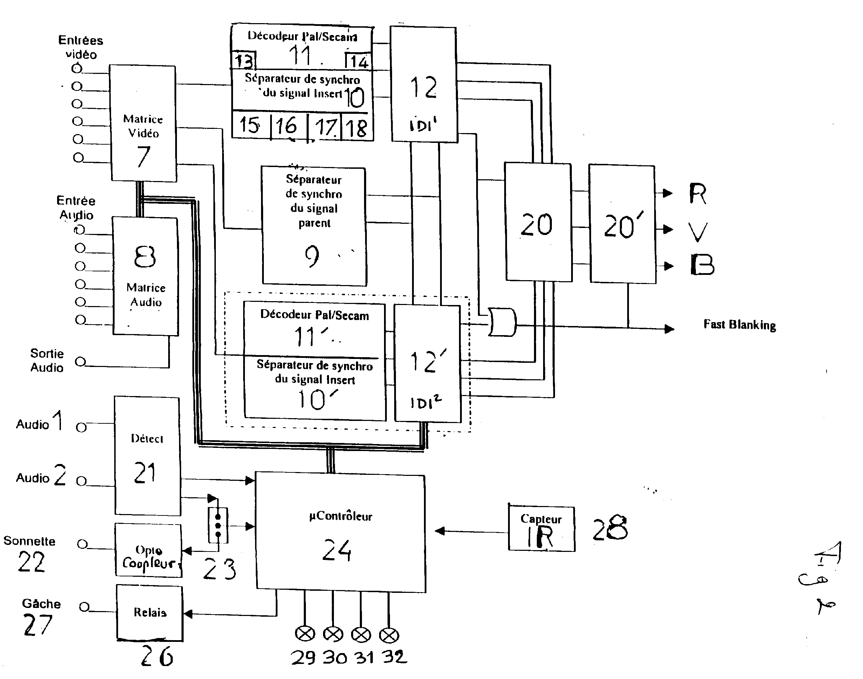

La planche 2 est le diagramme schématique d'un dispositif complet à six entrées vidéo-audio selon une réalisation préférée dans lequel apparaissent les différents composants, leur montage et le processus des diverses fonctions du dispositif.

### DESCRIPTION DETAILLEE DE L'INVENTION ET DES DESSINS

Le dispositif mobile selon l'invention est doté :
- de plusieurs entrées vidéo sur une matrice (7) laquelle aiguille les signaux vidéo entrant vers trois sorties vidéo : le signal Parent, le signal IDI 1 et en option le signal IDI 2
- et de plusieurs entrées audio sur une matrice (8) aiguillant des signaux audio vers les mêmes sorties.

Ce dispositif est en outre caractérisé par un circuit semi-conducteur (12) par exemple du type de Siemens SDA 9288X pour le signal IDI 1 (et (12') pour le signal IDI 2) lequel assure l'incrustation d'une image dans l'image.

Pour assurer cette fonction le circuit (12) reçoit :
- un signal de synchronisation horizontale de l'image Parent;
- un signal de synchronisation verticale de celle-ci;
- un signal de synchronisation horizontale et verticale de l'image Insert (signal Sandcastle);
- des informations de chrominance de l'image Insert.

Les deux signaux de synchronisation de l'image Parent sont fournis par un séparateur (9) de synchronisation horizontale. Le signal Sandcastle de l'image Insert est fourni par le séparateur (13) de synchronisation horizontale.

Des circuits intégrés (10) et (14) monostables permettent le réglage de la durée de ces signaux de synchronisation horizontale.

Les informations de chrominance sont obtenues grâce au décodeur multi standards (11) et à la ligne à retard (15), le signal Insert étant filtré à l'aide d'une inductance réglable (16) du séparateur (10). Pour obtenir un réglage correct de la couleur, il faut agir sur une deuxième inductance (17) de ce séparateur lorsque l'on est en procédé SECAM et sur un condensateur réglable (18) lorsque l'on est en PAL. Le décodeur multi-standards (11) détecte automatiquement si un signal vidéo est de type PAL ou SECAM. Il possède 2 sorties PAL ou SECAM qui modifient la configuration des filtres (16) et (17) par l'intermédiaire d'un transistor (18). Le décodeur multi-standards (11) reçoit aussi le signal Sandcastle en provenance du séparateur (9).

Les signaux Rouge Vert Bleu (RVB) sortant du circuit (20) sont envoyés vers la prise Peritel par l'intermédiaire du commutateur vidéo (20) et ils sont validés par le signal Fast-Blanking généré par le circuit (12).

Deux comparateurs (21) permettent de détecter un niveau sur les première et deuxième entrées son (1 et 2). Cette détection provoque l'apparition automatique de l'image de l'entrée vidéo correspondante dans l'IDI. La première entrée vidéo apparaît aussi si l'on active l'entrée sonnette (22). Le choix du type de détection est assuré par le sélecteur (23). L'ensemble audio-vidéo est géré par un micro contrôleur (24) suivant le protocole connu I²c lequel pilote par l'intermédiaire d'un circuit (25) un relais (26) télécommandant une gâche électrique d'ouverture.

Le dispositif selon l'invention peut-être télécommandé grâce à un code Infra-Rouge de type standard par exemple le code RC5 de Philips mis en forme par un capteur (28) et décodé directement par le micro contrôleur (24).

Le dispositif ainsi que précisé peut-être complété par :
- une télécommande infra rouge alimentée par piles
- une ou plusieurs caméras audio couleur ou noir et blanc internes ou externes pour la surveillance des enfants en bas âge, externes pour la sécurité extérieure ou l'identification de visiteurs avant l'ouverture de porte

Dans une réalisation préférée le fonctionnement de la télécommande peut-être illustré de la façon suivante :
- Bouton ON/OFF: fait apparaître ou disparaître l'IDI de l'écran.
- Boutons 1 à 6: fait apparaître l'IDI avec le signal vidéo de l'entrée correspondant au bouton.
- Bouton ZOOM: bascule l'image IDI en plein écran et fait disparaître l'IDI.
- Bouton GEL: gèle l'image dans l'IDI, un 2ème appui annulant cette commande.
- Bouton POS: à chaque appui sur cette touche, l'IDI change de place sur l'écran.
- Bouton COULEUR: à chaque appui sur cette touche, le contour de l'IDI change de couleur.
- Bouton GACHE: envoie une impulsion sur la GACHE d'ouverture de porte.
- Bouton 1/2: les réglages affectent l'IDI 1 ou l'IDI 2 (modèle à 2 IDI).
- Bouton RESET: met la carte dans la configuration de mise sous tension.

Dans cette réalisation préférée, le dispositif possède les voyants suivants:
(29) PAL
(30) SECAM
(31) Gache
(32) Sonnette

## Revendications

1. Dispositif mobile d'insertion d'une ou deux images dans l'image d'un signal vidéo composite en PAL/SECAM comportant sur des matrices (5) et (6), plusieurs entrées vidéo et audio, caractérisé en ce que:
- les dites matrices aiguillent les dits signaux vers trois sorties vidéo: le signal Parent , le signal IDI (7) et en option le signal IDI (7');
- un circuit (8) semi-conducteur assure l'incrustation de l'image dans l'image ;
- le même circuit reçoit un signal de synchronisation horizontale d'une image Parent, un signal de synchronisation verticale de la même image, un signal de synchronisation horizontale et verticale de l'image Insert, des informations de chrominance de cette dernière image;
- les signaux de synchronisation de l'image Parent sont fournis par un séparateur de synchronisation horizontale (9);
- le signal Sandcastle de l'image Insert est fourni par un séparateur de synchronisation horizontale;
- des circuits intégrés et monostables permettent le réglage de la durée de ces signaux de synchronisation horizontale;
- les informations de chrominance sont obtenues grâce au décodeur multi standards et à une ligne à retard;
- le signal Insert est filtré à l'aide de l'inductance réglable du séparateur (10);
- le décodeur multistandards (11) détecte automatiquement si un signal vidéo est de type PAL ou SECAM au moyen de 2 sorties PAL ou SECAM lesquelles modifient la configuration des filtres (16) et (17) du décodeur (11) par l'intermédiaire d'un transistor (18);

2. Dispositif mobile selon la revendication 1 caractérisé en ce que deux comparateurs ou détecteurs (21) permettent de déceler un niveau sur les premières et deuxième entrées son (1) et (2), ladite détection provoquant l'apparition automatique de l'image de l'entrée vidéo correspondante dans l'IDI;

3. Dispositif selon la revendication 1 caractérisé en ce que la première entrée vidéo apparait aussi à l'écran si l'on active l'entrée sonnette (22), le choix du type de détection étant assuré par le sélecteur (23);

4. Dispositif selon les revendications 1 à 3 caractérisé en ce que l'ensemble est géré par le micro-contrôleur (24) suivant le protocole connu I²C lequel pilote un relais (26) par l'intermédiaire d'un circuit (25) télécommandant une gâche d'ouverture (27);

5. Dispositif selon les revendications 1 à 4 caractérisé en ce que ledit dispositif peut être télécommandé grâce à un code Infra rouge de type standard mis en forme par un capteur (28) et décodé directement par le micro- contrôleur (24);

6. Dispositif selon la revendication 1 en ce que la commande Infra rouge alimentée par piles actionne plusieurs caméras audio, couleur, noir et blanc, de surveillance interne ou externe, interne pour la surveillance des enfants en bas âge, externe pour la sécurité extérieure ou l'identification de visiteurs avant l'ouverture de porte;

7. Dispositif selon les revendications 5 et 6 caractérisé en ce que le dispositif selon la revendication 1 est télécommandé de la façon suivante:
Bouton ON/OFF fait apparaître ou disparaître l'IDI de l'écran;
Boutons 1 à 6 fait apparaître l'IDI avec le signal vidéo de l'entrée correspondant au bouton;
Bouton ZOOM bascule l'image lDl en plein écran et fait disparaître l'IDI;
Bouton GEL gèle l'image dans l'IDI, un 2ème appui annulant cette commande;
Bouton POS à chaque appui sur cette touche, l'IDI change de place sur l'écran;
Bouton COULEUR à chaque appui sur cette touche, le contour de l'IDI change de couleur;
Bouton GACHE envoie une impulsion sur la GACHE d'ouverture de la porte;
Bouton 1/2 les réglages affectent l'IDI 1 ou l'IDI 2 (modèle à 2 IDI);
Bouton RESET met la carte dans la configuration de mise sous tension;

8. Dispositif caractérisé selon la revendication 1 en ce qu'il contient au moins 4 voyants:
(29) PAL
(30) SECAM
(31) GACHE
(32) SONNETTE
